# EUROPÄISCHE PATENTANMELDUNG

(11) **EP 4 421 893 A1**
(43) Veröffentlichungstag der Anmeldung: **28.08.2024**
(21) Anmeldenummer: 24156402.0
(22) Anmeldetag: 07.02.2024
(51) Int. Cl.: H01M 4/04, H01M 4/139, B29C 43/00, B29C 43/28, C23C 24/06

(54) **VERFAHREN ZUR HERSTELLUNG VON ELEKTRODEN FÜR AKKUMULATORZELLEN, VORRICHTUNG ZUR HERSTELLUNG VON ELEKTRODEN FÜR AKKUMULATORZELLEN UND AKKUMULATOR**

(30) Priorität: 21.02.2023 DE 102023201530
(71) Anmelder: VOLKSWAGEN AG, 38440 Wolfsburg (DE)
(72) Erfinder: BUßWINKEL, Ludger, 38106 Braunschweig (DE); REUBER, Sebastian, 01099 Dresden (DE); SCHMIDT-LOBACH, Roland, 39356 Hörsingen (DE); SCHOPF, Sven, 38116 Braunschweig (DE)
(74) Vertreter: FDST Patentanwälte

(57) **Zusammenfassung**

Die Erfindung betrifft ein Verfahren zur Herstellung von Elektroden für Akkumulatorzellen, wobei ein Materialband (4) zumindest auf einer ersten Seite (14) mit einem Beschichtungsmaterial (6) beschichtet wird und wobei das Beschichtungsmaterial (6) mittels einer ersten Auftragungs-Walze (10) auf die erste Seite (14) aufgetragen wird.

## Beschreibung

Die Erfindung betrifft ein Verfahren zur Herstellung von Elektroden für Akkumulatorzellen. Ausserdem betrifft die Erfindung eine Vorrichtung zur Herstellung von Elektroden für Akkumulatorzellen und sie betrifft einen Akkumulator.

Akkumulatoren, wie Lithium-Ionen-Akkumulatoren, sind aktuell weit verbreitet. Sie kommen unter anderem in Kraftfahrzeugen zum Einsatz und werden hier zum Beispiel als sogenannte Antriebsbatterien genutzt, also als Energiespeicher zur Versorgung elektrischer Antriebsmaschinen.

Häufig weist ein entsprechender Akkumulator mehrere miteinander verschaltete Akkumulatorzellen auf, wobei die Akkumulatorzellen hierbei üblicherweise im Wesentlichen einheitlich ausgestaltet sind. Insbesondere bei Lithium-Ionen-Akkumulatoren weist jede Akkumulatorzelle typischerweise zwei Elektroden, einen Separator sowie einen Elektrolyten auf.

Ausgehend hiervon liegt der Erfindung die Aufgabe zugrunde, ein vorteilhaftes Verfahren zur Herstellung von Elektroden für Akkumulatorzellen anzugeben, eine vorteilhaft ausgestaltete Vorrichtung zur Herstellung von Elektroden für Akkumulatorzellen und einen vorteilhaft ausgebildeten Akkumulator.

Diese Aufgabe wird durch ein Verfahrens mit den Merkmalen des Anspruchs 1, durch eine Vorrichtung mit den Merkmalen des Anspruchs 9 sowie durch einen Akkumulator mit den Merkmalen des Anspruchs 10 gelöst. Bevorzugte Ausgestaltungen und Weiterbildungen sind Gegenstand der Unteransprüche. Die im Hinblick auf das Verfahren angeführten Vorteile und Ausgestaltungen sind sinngemäß auch auf die Vorrichtung und/oder den Akkumulator übertragbar und umgekehrt.

Das erfindungsgemäße Verfahren dient dabei der Herstellung von Elektroden für Akkumulatorzellen und ist dementsprechend hierfür ausgelegt. Ausgeführt wird das Verfahren, also das erfindungsgemäße Verfahren, bevorzugt mittels der erfindungsgemäßen Vorrichtung, welche ihrerseits ausgebildet und eingerichtet ist zur Herstellung von Elektroden für Akkumulatorzellen gemäß dem erfindungsgemäßen Verfahren. Durch Anwendung des Verfahrens werden dann Elektroden für Akkumulatorzellen, weiter bevorzugt Akkumulatorzellen und insbesondere erfindungsgemäße Akkumulatoren hergestellt, wobei jeder Akkumulator, also jeder erfindungsgemäße Akkumulator, wenigstens eine Akkumulatorzelle aufweist mit zumindest einer Elektrode, welche hergestellt ist durch das erfindungsgemäße Verfahren.

In den meisten Fällen weist der erfindungsgemäße Akkumulator jedoch mehrere miteinander verschaltete Akkumulatorzellen auf, wobei die Akkumulatorzellen hierbei üblicherweise im Wesentlichen einheitlich ausgestaltet sind. Dabei weist jede Akkumulatorzelle zweckdienlicherweise zwei Elektroden, einen Separator sowie einen Elektrolyten auf. Weiter ist der Akkumulator bevorzugt als Lithium-Ionen-Akkumulator ausgebildet. Je nach Anwendungsfall ist er zum Beispiel für eine Verwendung in einem Kraftfahrzeugen ausgelegt, also beispielsweise als Energiespeicher zur Versorgung einer elektrischen Antriebsmaschine.

Zur Herstellung von Elektroden für Akkumulatorzellen wird nun im Zuge der Ausführung des erfindungsgemäßen Verfahrens ein beschichtetes Materialband hergestellt. Es erfolgt somit im Zuge der Ausführung des Verfahrens, also des erfindungsgemäßen Verfahrens, eine Bearbeitung eines Materialbands.

Bei einem solchen Materialband handelt es sich typischerweise um ein vorgefertigtes Bandmaterial, welches üblicherweise eine Metallfolie, beispielsweise eine Kupferfolie oder eine Aluminiumfolie, aufweist oder durch eine solche Metallfolie ausgebildet ist. Außerdem liegt das Materialband typischerweise als sogenanntes Endlosmaterial oder Rollenmaterial vor. Das Materialband weist hierbei eine Länge auf, welche wesentlich größer dimensioniert ist, als dessen Breite oder Dicke beziehungsweise Höhe. Dabei weist das Materialband bevorzugt eine Breite auf, deren Wert größer gleich 400 mm und insbesondere größer gleich 500 mm ist, also beispielsweise eine Breite von 600 mm.

Bei der Bearbeitung wird das Materialband auf zumindest einer ersten Seite mit einem Beschichtungsmaterial beschichtet. Das Beschichtungsmaterial weist dabei ein Aktivmaterial auf, nämlich ein sogenanntes Elektrodenaktivmaterial oder kurz Elektrodenmaterial. Entsprechende Aktivmaterialien sind hierbei prinzipiell bekannt. Beispiele für Aktivmaterialien für die Ausbildung von negativen Elektroden sind Graphit und Silizium. Beispiele für Elektrodenmaterialien für die Ausbildung von positiven Elektroden sind NMC (Lithium-Nickel-Mangan-Cobalt-Oxid), LFP (Lithiumeisenphosphat) und NCA (Lithium-Nickel-Cobalt-Aluminium-Oxid). Je nach Anwendungsfall weist das Beschichtungsmaterial zudem einen sogenannten Binder auf und/oder ein sogenanntes Leitadditiv.

Das Beschichtungsmaterial wird dabei mittels einer ersten Auftragungs-Walze auf die erste Seite aufgetragen oder aufgebracht. Es erfolgt hierbei insbesondere eine direkte Übertragung des Beschichtungsmaterials von der ersten Auftragungs-Walze auf das Materialband. Somit wird dann das Beschichtungsmaterial quasi auf das Materialband aufgewalzt.

Die erste Auftragungs-Walze ist dabei typischerweise ergänzt durch eine Gegenwalze, wobei die erste Auftragungs-Walze und die Gegenwalze im Betrieb üblicherweise gegenläufig rotieren. Das Materialband wird in diesem Fall dann zur Beschichtung zwischen der ersten Auftragungs-Walze und der Gegenwalze hindurchgeführt und in einem Zwischenraum zwischen der ersten Auftragungs-Walze und der Gegenwalze wird das Beschichtungsmaterial mittels der ersten Auftragungs-Walze auf die erste Seite des Materialbands aufgetragen oder aufgebracht.

Weiter erfolgt die Beschichtung des Materialbands, also die Auftragung oder Aufbringung des Beschichtungsmaterials auf das Materialband, vorzugsweise lösungsmittelfrei, also insbesondere ohne ein flüssiges Lösungsmittel. D. h., dass beispielsweise auf die Herstellung eine Suspension, welche das Aktivmaterial und ein flüssiges Lösungsmittel aufweist, bevorzugt verzichtet wird. Aufgrund des Verzichts auf ein flüssiges Lösungsmittel wird bei dem hier beschriebenen Verfahren auch von einer trockenen Elektrodenherstellung gesprochen oder eben von einer lösungsmittelfreien Elektrodenherstellung.

Bevorzugt ist zudem eine Verfahrensvariante, bei der das Beschichtungsmaterial als Pulver oder Pulvermischung vorliegt und insbesondere auch als Pulver auf die erste Auftragungs-Walze aufgebracht oder aufgetragen wird. Zweckdienlich ist es weiterhin, wenn das auf die erste Auftragungs-Walze aufgebrachte Beschichtungsmaterial nachfolgend verdichtet wird. Dabei erfolgt die Verdichtung bevorzugt vor der Auftragung oder Aufbringung des Beschichtungsmaterials auf das Materialband.

Vorteilhaft ist dabei insbesondere eine Verfahrensvariante, bei der das Beschichtungsmaterial auf der ersten Auftragungs-Walze mittels einer ersten Anpress-Walze verdichtet wird. Die erste Auftragungs-Walze ist somit dann ergänzt durch die erste Anpress-Walze, wobei die erste Auftragungs-Walze und die erste Anpress-Walze im Betrieb üblicherweise gegenläufig rotieren. Das Beschichtungsmaterial wird in diesem Fall dann zwischen der ersten Auftragungs-Walze und der ersten Anpress-Walze hindurchgeführt und in einem Zwischenraum zwischen der ersten Auftragungs-Walze und der ersten Anpress-Walze wird das Beschichtungsmaterial verdichtet.

Von Vorteil ist es außerdem, wenn das Beschichtungsmaterial über eine vorgegebene erste Beschichtungsbreite hinweg auf die erste Seite des Materialbands aufgetragen wird. Die erste Beschichtungsbreite entspricht dabei der vorgesehenen Breite der Beschichtung auf der ersten Seite des Materialbands, also der vorgesehenen Ausdehnung der Beschichtung quer zur Längsrichtung des Materialbands.

Die vorgesehene Ausdehnung des Beschichtungsmaterials quer zur Längsrichtung wird hierbei zudem bevorzugt auf der ersten Auftragungs-Walze vorgegeben und damit typischerweise noch bevor das Beschichtungsmaterial auf das Materialband aufgebracht wird. Außerdem bevorzugt wird die vorgesehene Ausdehnung des Beschichtungsmaterials quer zur Längsrichtung vorgegeben, indem die Ausdehnung des Beschichtungsmaterials quer zur Längsrichtung auf der ersten Auftragungs-Walze reduziert wird auf die vorgegebene erste Beschichtungsbreite. D. h., dass das Beschichtungsmaterial üblicherweise zunächst mit einer vorläufigen Ausdehnung quer zur Längsrichtung auf die erste Auftragungs-Walze aufgebracht wird und dass diese vorläufige Ausdehnung nachfolgend auf die erste Beschichtungsbreite reduziert wird. Somit ist dann zweckdienlicherweise die vorläufige Ausdehnung quer zur Längsrichtung größer als die erste Beschichtungsbreite. Von Vorteil ist es außerdem, wenn die vorläufige Ausdehnung mittels zumindest eines mechanischen Elements auf die erste Beschichtungsbreite reduziert wird, also insbesondere eines mechanischen Elements, welches nach Art eines Messers und/oder Schabers wirkt.

Vorzugsweise wird die erste Beschichtungsbreite mit Hilfe eines Quetschmessers vorgegeben und zwar insbesondere mittels Quetschschnitt auf der ersten Auftragungs-Walze. Bei einem entsprechenden Quetschmesser handelt es sich typischerweise um eine Messerscheibe, welche beispielsweise eine keilförmige Schneide aufweist. Jene Messerscheibe liegt dann vorzugsweise an der ersten Auftragungs-Walze an und quetscht das Beschichtungsmaterial entlang einer vorgesehenen Kante auseinander.

In vorteilhafter Weiterbildung wird für das Quetschmesser dabei ein Anpressdruck vorgegeben, mit dem das Quetschmesser an der ersten Auftragungs-Walze anliegt. Je nach Ausführungsvariante wird der Anpressdruck beispielsweise mithilfe eines Federelements vorgegeben. Alternativ wird der Anpressdruck über eine Pneumatik vorgegeben und ist somit pneumatisch einstellbar.

Darüber hinaus ist es günstig, wenn die erste Beschichtungsbreite mithilfe eines Schabers vorgegeben wird, mit dem Beschichtungsmaterial von der ersten Auftragungs-Walze abgeschabt wird. Bevorzugt ist dabei insbesondere eine Ausgestaltung, bei der der Schaber das zuvor genannte Quetschmesser ergänzt, sodass mittels des Schabers das vom Quetschmesser durch Quetschschnitt abgetrennte, überschüssige Beschichtungsmaterial von der ersten Auftragungs-Walze abgeschabt wird.

Von Vorteil ist weiterhin eine Ausführung, bei der zwei Quetschmesser der zuvor beschriebenen Art zur Vorgabe der ersten Beschichtungsbreite genutzt werden. Die beiden Quetschmesser sind dabei dann zweckdienlicherweise in Richtung einer Längsachse der ersten Auftragungs-Walze gesehen beabstandet voneinander angeordnet, wobei der Abstand zwischen den beiden Quetschmessern die erste Beschichtungsbreite vorgibt. In vorteilhafter Weiterbildung ist zudem jedem der zwei Quetschmesser ein Schaber der zuvor beschriebenen Art beigeordnet.

Gemäß dem hier vorgestellten Verfahren wird nun also vorzugsweise das Beschichtungsmaterial zunächst über eine Breite auf die erste Auftragungs-Walze aufgebracht, die größer ist, als die vorgesehene Breite der Beschichtung auf der ersten Seite des Materialbands. In der Folge wird dann die Breite auf der ersten Auftragungs-Walze reduziert auf die erste Beschichtungsbreite und mit der ersten Beschichtungsbreite wird das Beschichtungsmaterial schließlich auf das Materialband aufgebracht.

Mit der Reduzierung erfolgt dabei zweckdienlicherweise ein gezieltes Einstellen der Beschichtungsbreite, also insbesondere eine Art Edge-Trimming. Dabei erfolgt die Reduzierung bevorzugt mittels Quetschschnitt, also mit Hilfe der zuvor genannten Quetschmesser. Einer alternativen Variante entsprechend erfolgt die Reduzierung mittels sogenanntem Kiss-Cut oder Rollenstanzen.

Zweckdienlich ist es weiter, wenn für die Reduzierung Messer mit rechteckigen Klingen (Rasiermesser) eingesetzt werden. Alternativ kommen Rundmesser zum Einsatz, die beispielsweise angetrieben oder im Schleppbetrieb eingesetzt werden.

Davon unabhängig wird vorzugsweise der Abstand zwischen der ersten Auftragungs-Walze und den eingesetzten Messern mikrometergenau eingestellt und somit mikrometergenau vorgegeben.

Zudem wird im Zuge einer zuvor beschriebenen Reduzierung der Breite typischerweise Beschichtungsmaterial wieder von der ersten Auftragungs-Walze gelöst. Das von der ersten Auftragungs-Walze gelöste Beschichtungsmaterial wird weiter bevorzugt aufgefangen oder abgesaugt, insbesondere damit dieses nicht unkontrolliert abfällt. Zweckdienlich ist es dabei, wenn das aufgefangene oder abgesaugte Beschichtungsmaterial wiederverwendet wird.

Weiter weist das Materialband typischerweise die zuvor genannte erste Seite sowie eine gegenüberliegende zweite Seite auf. Je nach Anwendungsfall wird hierbei zusätzlich zur ersten Seite auch die zweite Seite mit einem Beschichtungsmaterial der zuvor beschriebenen Art beschichtet, insbesondere mit demselben Beschichtungsmaterial wie die erste Seite.

Zweckdienlicherweise wird dabei das Beschichtungsmaterial mittels einer zweiten Auftragungs-Walze auf die zweite Seite des Materialbandes aufgetragen. In diesem Fall dient dann typischerweise die zweite Auftragungs-Walze zudem auch als zuvor beschriebene Gegenwalze für die erste Auftragungs-Walze und die erste Auftragungs-Walze dient analog als Gegenwalze für die zweite Auftragungs-Walze.

Weiterhin ist auch die zweite Auftragungs-Walze bevorzugt ergänzt durch eine Anpress-Walze, nämlich durch eine zweite Anpress-Walze. Analog zur ersten Anpress-Walze wird dann auch mittels der zweiten Anpress-Walze das Beschichtungsmaterial verdichtet, und zwar das Beschichtungsmaterial auf der zweiten Auftragungs-Walze.

Außerdem ist es von Vorteil, wenn das Beschichtungsmaterial über eine vorgegebene zweite Beschichtungsbreite hinweg auf die zweite Seite des Materialbands aufgetragen wird. Die Vorgabe der zweiten Beschichtungsbreite erfolgt dabei bevorzugt in einer Weise, wie sie zuvor für die erste Beschichtungsbreite beschrieben wurde.

Zusammenfassend und mit anderen Worten ausgedrückt wird hier ein Konzept vorgestellt, welches eine Elektrodenherstellung ermöglicht und zwar insbesondere eine lösungsmittelfreie oder trockene Elektrodenherstellung. Dabei ist von besonderer Bedeutung:
- Die Elektrodenherstellung erfolgt hierbei bevorzugt mittels einer Anzahl Walzen, insbesondere mittels einer Anzahl Kalander-Walzen, wobei typischerweise zumindest ein walzengetragener Elektrodenfilm aus Beschichtungsmaterial auf ein Bandmaterial aufgebracht wird zur Ausbildung einer Beschichtung. Das Aufbringen erfolgt dabei typischerweise in einem Kalander-Spalt zwischen zwei Walzen.
- Das Konzept ermöglicht zudem vorzugsweise auch eine exakte Vorgabe/exakte Einstellung der Breite der Beschichtung. Dazu wird jede Elektrodenfilmkante bevorzugt mittels Quetschschnitt ausgebildet, wobei jeder Quetschschnitt typischerweise direkt auf einer der Walzen vorgenommen wird, um schließlich eine exakte Beschichtungsbreite mit gleichbleibend qualitativ hochwertiger Beschichtungskante zu erzeugen. Weiter bevorzugt wird jeder Quetschschnitt ergänzt durch einen Rakelprozess zur Entfernung von überschüssigem Beschichtungsmaterial am Elektrodenfilmrand.
- Das überschüssige Beschichtungsmaterial wird weiter bevorzugt entweder direkt in einem Behälter aufgefangen oder abgesaugt und in einen separaten Behälter gefördert. Von dort aus wird das überschüssige Beschichtungsmaterial vorzugsweise direkt wieder einem der vorherigen Prozessschritte zugeführt (direktes Recycling).
- Die Positionen und Anpresskräfte der eingesetzten Quetschmesser sowie der eingesetzten Rakel werden vorzugsweise je nach Prozessanforderungen variabel eingestellt. Dazu wird gemäß einer bevorzugten Ausführung eine pneumatische Ansteuerung verwendet, um eine gleichbleibende Anstellkraft und Position zu gewährleisten.
- Als Option ist eine optische Kantenerkennung der Beschichtungsbreite vorgesehen, die weiter bevorzugt über eine Closed-loop-Regelung die exakte Positionierung der Quetschmesser und der Rakel ermöglicht.
- In einer alternativen Ausführungsvariante des Verfahrens wird anstelle eines Quetschschnitts ein sogenannter Kiss-Cut wie beim Rollenstanzen eingesetzt, bei dem ein Messer einen definierten Abstand zum Gegenkörper (Kalander-Walze) von wenigen µm aufweist. Als Messer wird dann beispielsweise eine rechteckige Klinge (Rasiermesser) oder ein Rundmesser (angetrieben oder im Schleppbetrieb) eingesetzt.
- Als eine Alternative zur pneumatischen Anpressung ist eine mechanische Anpressung mittels Federelement vorgesehen.

Das Konzept bietet dabei je nach Ausführungsvariante die Vorteile:
- Durch eine Verwendung eines Quetschschnitts mit einer pneumatischen Anpressung eines Quetschmessers auf eine Walze/Kalander-Walze lässt sich eine Schnittkraft gezielt einstellen.
- Die pneumatische Anpressung ermöglicht eine gleichbleibende Anpresskraft, die exakt einstellbar und regelbar ist.
- Die Schnittposition lässt sich exakt und reproduzierbar einstellen und durch einen gekoppelten Schaber/Rakel lässt sich die abgeschnittene Randkante direkt von der Walze/Kalander-Walze entfernen.
- Der Quetschschnitt gewährleistet eine reproduzierbar einstellbare Schnittkantenqualität mit definierte Anpresskraft.
- Die Verwendung eines KissCut hat den Vorteil, dass kein Kontakt zwischen Messer und Walze besteht, wodurch die Lebensdauer der Klinge vergrößert wird und der Verschleiß der Kalander-Walze reduziert wird (Laufspuren).
- Durch das Verfahren lässt sich die Beschichtungskante exakt positionieren und mit einer für das Produkt erforderlichen Qualität herstellen.
- Überschüssiges Material lässt sich entfernen und direkt wieder dem vorangehenden Prozessschritt zuführen.

Wie zuvor beschrieben wird also im Zuge der Ausführung des erfindungsgemäßen Verfahrens ein beschichtetes Materialband hergestellt. Die Herstellung des beschichteten Materialbands erfolgt dabei zweckdienlicherweise in einem Verfahrensteil des Verfahrens zur Herstellung von Elektroden für Akkumulatorzellen. Dieser Verfahrensteil wird bevorzugt mittels einer Bearbeitungsstation durchgeführt, welche Teil der erfindungsgemäßen Vorrichtung zur Herstellung von Elektroden für Akkumulatorzellen ist.

In einem weiteren Verfahrensteil des Verfahrens wird das beschichtete Materialband dann zweckdienlicherweise zugeschnitten, wobei Elektroden herausgetrennt oder herausgeschnitten werden. Der weitere Verfahrensteil wird dabei bevorzugt mittels einer weiteren Bearbeitungsstation der erfindungsgemäßen Vorrichtung durchgeführt.

Weitere Vorteile, Merkmale und Einzelheiten der Erfindung ergeben sich aus den Ansprüchen, der nachfolgenden Beschreibung bevorzugter Ausführungsformen sowie anhand der schematischen Zeichnungen. Darin zeigen:
- Fig. 1: in einer Seitenansicht eine Vorrichtung zur Herstellung von Elektroden für Akkumulatorzellen, und
- Fig. 2: in einer Ansicht von unten die Vorrichtung.

Einander entsprechende Teile sind in allen Figuren mit den gleichen Bezugszeichen versehen.

Ein nachfolgend exemplarisch beschriebenes Verfahren dient zur Herstellung von Elektroden für Akkumulatorzellen. Es weist zwei Verfahrensteile auf, nämlich einen Verfahrensteil Beschichten und einen Verfahrensteil Zuschneiden. Im Zuge der Ausführung des Verfahrensteils Beschichten wird dabei ein beschichtetes Materialband 2 hergestellt, indem ein vorgefertigtes Materialband 4 mit einem Beschichtungsmaterial 6 beschichtet wird, welches zum Beispiel Graphit aufweist. Im Zuge der Ausführung des Verfahrensteils Zuschneiden wird dann das beschichtete Materialband 2 zugeschnitten, wobei Elektroden herausgetrennt oder herausgeschnitten werden.

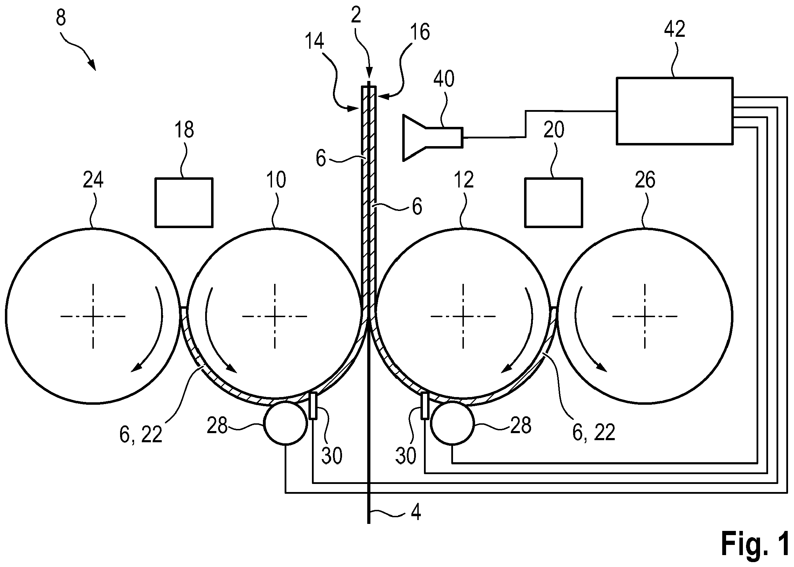

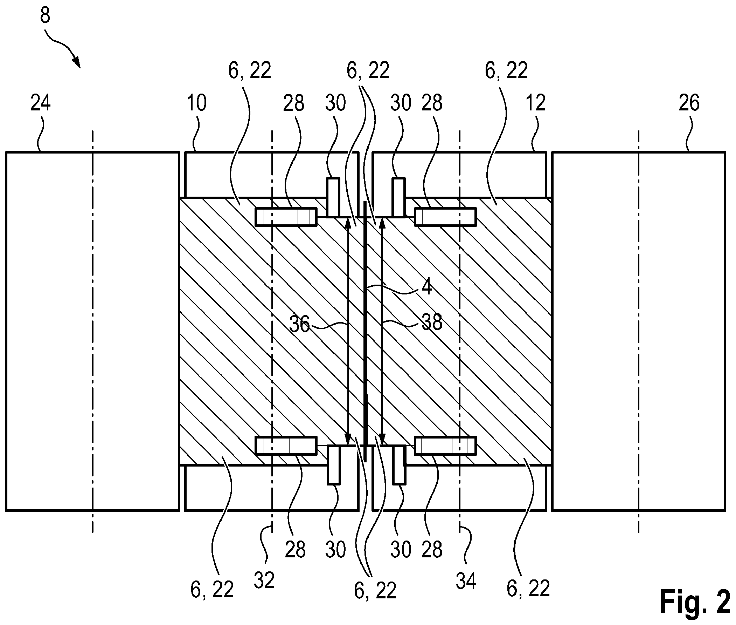

Der Verfahrensteil Beschichten wird nachfolgend näher beschrieben. Er wird ausgeführt mittels einer Vorrichtung 8, welche in Fig. 1 und Fig. 2 in vereinfachter Form wiedergegeben ist. Sie ist dabei in Fig. 1 in einer Seitenansicht und in Fig. 2 in einer Ansicht von unten gezeigt.

Die Vorrichtung 8 weist hierbei im Ausführungsbeispiel zwei Auftragungs-Walzen 10,12 auf, nämlich eine erste Auftragungs-Walze 10 und eine zweite Auftragungs-Walze 12. Mittels der ersten Auftragungs-Walze 10 wird im Betrieb der Vorrichtung 8 das Beschichtungsmaterial 6 auf eine erste Seite 14 des Materialbands 4 aufgebracht. Es erfolgt hierbei eine direkte Übertragung des Beschichtungsmaterials 6 von der ersten Auftragungs-Walze 10 auf das Materialband 4. Somit wird das Beschichtungsmaterial 6 quasi auf das Materialband 4 aufgewalzt. Mittels der zweiten Auftragungs-Walze 12 wird in analoger Weise das Beschichtungsmaterial 6 auf eine zweite Seite 16 des Materialbands 4 aufgebracht. Auch hier wird das Beschichtungsmaterial 6 quasi auf das Materialband 4 aufgewalzt.

Die zwei Auftragungs-Walzen 10,12 bilden hierbei zusammen ein Walzen-Paar. Sie sind mit geringem Abstand zueinander angeordnet und rotieren im Betrieb gegenläufig. Das Materialband 4 ist dabei zwischen den zwei Auftragungs-Walzen 10,12 hindurchgeführt und wird in einem Zwischenraum zwischen den zwei Auftragungs-Walzen 10,12 beidseitig mit dem Beschichtungsmaterial 6 beschichtet. Die zwei Auftragungs-Walzen 10,12 wirken daher quasi nach Art sogenannter Kalander-Walzen.

Bei dem Materialband 4 handelt es sich typischerweise um ein vorgefertigtes Bandmaterial, welches üblicherweise durch eine Metallfolie, beispielsweise eine Kupferfolie oder eine Aluminiumfolie, ausgebildet ist. Dabei liegt das Materialband 4 bevorzugt als sogenanntes End-Iosmaterial oder Rollenmaterial vor, welches den zwei Auftragungs-Walzen 10,12 quasi kontinuierlich zugeführt wird.

Das Beschichtungsmaterial 6, welches von den Auftragungs-Walzen 10,12 auf das Materialband 4 auftragen wird, wird zuvor auf die Auftragungs-Walzen 10,12 aufgebracht. Dazu ist jeder Auftragungs-Walze 10,12 eine Zuführeinheit 18,20 zugeordnet. In den Zuführeinheiten 18,20 liegt das Beschichtungsmaterial 6 als Pulver vor und es wird auch in Pulverform auf die Auftragungs-Walzen 10,12 aufgebracht. Auf die Verwendung eines flüssigen Lösungsmittels zu Auftragung wird somit verzichtet.

Das Beschichtungsmaterial 6 wird nun also als Pulver aufgebracht und es wird nachfolgend zu einem Film 22 verdichtet, der an der jeweiligen Auftragungs-Walze 10,12, haftet, bis dieser im Zwischenraum zwischen den Auftragungs-Walzen 10,12 auf das Materialband übertragen wird. Dies geschieht an beiden Auftragungs-Walzen 10,12.

Das Verdichten erfolgt dabei mittel zweier Anpress-Walzen 24,26, wobei eine erste Anpress-Walze 24 der ersten Auftragungs-Walze 10 zugeordnet ist und wobei eine zweite Anpress-Walze 26 der zweiten Auftragungs-Walze 12 zugeordnet ist. In beiden Fällen bilden die Auftragungs-Walze 10,12 und die zugeordnete Anpress-Walze 24,26 ein Walzen-Paar aus, bei dem dessen Walzen mit geringem Abstand zueinander angeordnet sind und im Betrieb gegenläufig rotieren.

Weiter sind im Ausführungsbeispiel jeder Auftragungs-Walze 10,12 zwei Quetschmesser 28 zugeordnet und jedem Quetschmesser 28 ist ein Schaber 30 beigeordnet. Somit weist die Vorrichtung 8 vier Quetschmesser 28 und vier Schaber 30 auf.

Die zwei Quetschmesser 28 einer jeden Auftragungs-Walze 10,12 sind dabei in Richtung einer Längsachse 32,34 der zugehörigen Auftragungs-Walze 10,12 gesehen voneinander beabstandet angeordnet. Mit dem entsprechenden Abstand zwischen den zwei Quetschmessern 28 wird dann die jeweilige Breite der Beschichtung vorgegeben, also eine erste Beschichtungsbreite 32 auf der ersten Seite 14 des Materialbands 4 und eine zweite Beschichtungsbreite 34 auf der zweiten Seite 16 des Materialbands 4. D. h., dass mit jedem Quetschmesser 28 durch Quetschschnitt eine Berandung ausgebildet wird, welche zunächst den jeweiligen Film 22 auf der jeweiligen Auftragungs-Walze 10,12 begrenzt und hierdurch schließlich die Breite der jeweiligen Beschichtung auf der jeweiligen Seite des Materialbands 6.

Wie aus Fig. 2 hervorgeht ist im Ausführungsbeispiel eine einheitliche Breite für die Beschichtungen auf den zwei Seiten 14,16 des Materialbands 6 vorgegeben und somit entspricht die erste Beschichtungsbreite 32 auf der ersten Seite 14 des Materialbands 4 der zweiten Beschichtungsbreite 34 auf der zweiten Seite 16 des Materialbands 4.

Das über die jeweilige Berandung überstehende, überschüssige Beschichtungsmaterial 6 wird mittels der beigeordneten Schaber 30 von den jeweiligen Auftragungs-Walze 10,12 abgeschabt. Bevorzugt wird dann das abgeschabte Beschichtungsmaterial 6 in nicht näher dargestellter Weise wieder den Zuführeinheiten 18,20 zugeführt und schließlich wiederverwendet.

Wie in Fig. 1 angedeutet weist die Vorrichtung 8 vorzugsweise außerdem zumindest einen optischen Sensor 40 auf. Dieser generiert im Betrieb Sensordaten, die zum Beispiel die Beschichtung auf der zweiten Seite 16 abbilden. Die Sensordaten werden weiter bevorzugt mittels einer Steuer- und Auswerteeinheit 42 der Vorrichtung 8 ausgewertet. Hierdurch erfolgt zum Beispiel eine Überwachung der Beschichtungsbreite, insbesondere mit Hilfe einer optischen Kantenerkennung. Gemäß einer vorteilhaften Weiterbildung wird dann eine aktuelle Beschichtungsbreite ermittelt und mit einem Sollwert verglichen. Außerdem bevorzugt erfolgt dann eine Regelung, beispielsweise über eine Closed-loop-Regelung, bei der Positionierung der Quetschmesser 28 und der Schaber 30 nachgeregelt wird.

### Bezugszeichenliste

- 2: beschichtetes Materialband
- 4: Materialband
- 6: Beschichtungsmaterial
- 8: Vorrichtung
- 10: erste Auftragungs-Walze
- 12: zweite Auftragungs-Walze
- 14: erste Seite
- 16: zweite Seite
- 18: erste Zuführungseinheit
- 20: zweite Zuführungseinheit
- 22: Film
- 24: erste Anpress-Walze
- 26: zweite Anpress-Walze
- 28: Quetschmesser
- 30: Schaber
- 32: erste Längsachse
- 34: zweite Längsachse
- 36: erste Beschichtungsbreite
- 38: zweite Beschichtungsbreite
- 40: Sensor
- 42: Steuer- und Auswerteeinheit

## Patentansprüche

1. Verfahren zur Herstellung von Elektroden für Akkumulatorzellen,
wobei ein Materialband (4) zumindest auf einer ersten Seite (14) mit einem Beschichtungsmaterial (6) beschichtet wird und wobei das Beschichtungsmaterial (6) mittels einer ersten Auftragungs-Walze (10) auf die erste Seite (14) aufgetragen wird.

2. Verfahren nach Anspruch 1,
wobei das Beschichtungsmaterial (6) lösungsmittelfrei aufgetragen wird.

3. Verfahren nach Anspruch 1 oder 2,
wobei das Beschichtungsmaterial (6) als Pulver auf die erste Auftragungs-Walze (10) aufgebracht wird.

4. Verfahren nach einem der Ansprüche 1 bis 3,
wobei das als Pulver aufgebrachte Beschichtungsmaterial (6) auf der ersten Auftragungs-Walze (10) verdichtet wird.

5. Verfahren nach Anspruch 4,
wobei das als Pulver aufgebrachte Beschichtungsmaterial (6) mittels einer ersten Anpress-Walze (24) verdichtet wird, während das Beschichtungsmaterial (6) zwischen der ersten Auftragungs-Walze (10) und der ersten Anpress-Walze (24) hindurchgeführt wird.

6. Verfahren nach einem der Ansprüche 1 bis 5,
wobei das Beschichtungsmaterial (6) über eine vorgegebenen ersten Beschichtungsbreite (36) hinweg auf die erste Seite (14) aufgetragen wird und wobei die erste Beschichtungsbreite (36) mittels eines Quetschmessers (28) auf der ersten Auftragungs-Walze (10) vorgegeben wird.

7. Verfahren nach Anspruch 6,
wobei der Anpressdruck des Quetschmessers (28) pneumatisch eingestellt wird.

8. Verfahren nach einem der Ansprüche 1 bis 7,
wobei das Beschichtungsmaterial (6) über eine vorgegebenen ersten Beschichtungsbreite (36) hinweg auf die erste Seite (14) aufgetragen wird und wobei die erste Beschichtungsbreite (36) mittels eines Schabers (30) vorgegeben wird, mit dem Beschichtungsmaterial (6) von der ersten Auftragungs-Walze (10) abgeschabt wird.

9. Vorrichtung (8) eingerichtet zur Herstellung von Elektroden für Akkumulatorzellen gemäß einem Verfahren nach einem der vorherigen Ansprüche.

10. Akkumulator aufweisend eine Akkumulatorzelle mit zumindest einer Elektrode, welche hergestellt ist durch ein Verfahren nach einem der vorherigen Ansprüche.
